# EUROPÄISCHE PATENTSCHRIFT

(11) **EP 2 604 373 B1**
(45) Veröffentlichungstag und Bekanntmachung des Hinweises auf die Patenterteilung: **04.03.2015**
(21) Anmeldenummer: 11193825.4
(22) Anmeldetag: 15.12.2011
(51) Int. Cl.: B23K 1/008, B23K 1/20, B01D 5/00

(54) **Verfahren und Vorrichtung zum Kondensieren von Verunreinigungen der Atmosphäre in einer Lötanlage unter Verwendung eines Gases zum Kühlen des Kühlkörpers**
Method of and device for condensing atmospheric impurities in a soldering assembly using a cooling gas for cooling the cooler
Procédé et dispositif de condensation d'impuretés de l'atmosphère dans une installation de soudage utilisant un gaz pour refroidir le refroidisseur

(43) Veröffentlichungstag der Anmeldung: 19.06.2013
(73) Patentinhaber: Air Liquide Deutschland GmbH, 40235 Düsseldorf (DE); L'Air Liquide Société Anonyme pour l'Etude et l'Exploitation des Procédés Georges Claude, 75007 Paris (FR)
(72) Erfinder: Ridgeway, Patrick, 41372 Niederkrüchten (DE); Liebert, Holger, 40237 Düsseldorf (DE); Coudurier, Laurent, 40549 Düsseldorf (DE)
(74) Vertreter: Heine, Christian Klaus

(56) Entgegenhaltungen:
- DE-A1- 4 242 820
- DE-B3- 10 301 102
- US-A1- 2008 295 686

## Beschreibung

Gegenstand der vorliegenden Erfindung ist ein Verfahren und eine Vorrichtung zum Kondensieren von Verunreinigungen der Atmosphäre in einer Lötanlage gemäß dem Oberbegriff der Ansprüche 1 und 6 (siehe, z.B., DE 42 42 820 A).

Lötanlagen zum Löten von Flachbaugruppen weisen üblicherweise eine Vorheizzone, eine Lötzone und eine Kühlzone auf. In der Vorheizzone werden die zu verlötenden Bauteile auf eine Temperatur knapp unterhalb der Schmelztemperatur des Lotes aufgeheizt, in der Lötzone wird die Temperatur auf die Schmelztemperatur des Lotes und gegebenenfalls darüber erhöht. In der Kühlzone erfolgt die Abkühlung der verlöteten Flachbaugruppen. Üblicherweise werden die Flachbaugruppen sukzessive durch die einzelnen Zonen hindurchgeführt.

In der Lötzone entstehen beim Löten üblicherweise Dämpfe, die sich nachteilig auf das Lotergebenis auswirken. Es ist daher bekannt die (Gas-)Atmosphäre in der Lötzone zu reinigen. Dies geschieht in der Regel mit einem Kondensationsverfahren, wobei die Atmosphäre einer Kondensationsfalle mit einem Kühlkörper zugeführt wird. Der Kühlkörper wird in der Regel mit Kühlanlagen gekühlt, die auf einer mechanischen Kühlung und Kälteübertragung mittels eines Kältemittels basieren. Solche Kühlanlagen, die beispielsweise mit Kühlwasser betrieben werden, sind im Betrieb sehr energieintensiv, wenig effizient und somit kostenintensiv. Insbesondere auch im Hinblick auf die dadurch entstehende zusätzliche Umweltbelastung ist die mangelnde Energieeffizienz nachteilig.

Hiervon ausgehend liegt der vorliegenden Erfindung die Aufgabe zugrunde, ein Verfahren und eine Vorrichtung zum Kondensieren von Verunreinigungen der Atmosphäre in einer Lötanlage anzugeben, bei denen die aus dem Stand der Technik bekannten Nachteile zumindest teilweise überwunden werden.

Diese Aufgaben werden gelöst durch die unabhängigen Ansprüche 1 und 6. Die jeweiligen abhängigen Ansprüche sind auf vorteilhafte Weiterbildungen gerichtet.

Vorteilhafte Weiterbildungen sind auch durch in der Beschreibung oder in den Figuren offenbarte Merkmale gegeben, die beliebig, in technologisch sinnvoller Weise miteinander und mit Merkmalen aus den Ansprüchen kombinierbar sind.

Das erfindungsgemäße Verfahren zum Kondensieren von Verunreinigungen der Atmosphäre in einer Lötanlage, bei dem die Atmosphäre aus der Lötanlage einer Kondensationsfalle mit einem Kühlkörper zugeführt wird, zeichnet sich dadurch aus, dass ein Kühlgas in den Kühlkörper geleitet wird, wobei das Kühlgas Inertgas umfasst.

Das bedeutet also, dass die Gase, die die Atmosphäre in der Lötanlage oder in Zonen der Lötanlage bilden, aus dem unmittelbaren Bereich einer Transportvorrichtung, auf der Flachbaugruppen durch die Lötanlage geleitet werden, abgesaugt werden. Die Gase der Atmosphäre werden einer Kondensationsfalle zugeführt, die neben dem mindestens einen Kühlkörper einen Vorratsbehälter zur Aufnahme des Kondensats aufweist. Die Atmosphäre in der Lötanlage ist in der Regel eine Schutzgasatmosphäre aus einem Inertgas, wobei durch den Lötprozess Dämpfe als Verunreinigungen in die Schutzgasatmosphäre gelangen. Aufgrund einer vorgebbaren, niedrigen Temperatur des Kühlkörpers kondensieren die Verunreinigungen in der Kondensationsfalle und gelangen in den Vorratsbehälter, der bei Bedarf geleert werden kann. Das durch Kondensation gereinigte Gas wird der Lötanlage wieder zugeführt, bevorzugt zu einer Zone, die in Transportrichtung der Flachbaugruppen vor der Zone liegt, aus der das verunreinigte Gas entnommen wurde.

Gemäß der vorliegenden Erfindung wird nun ein Kühlgas als Kühlmittel in den Kühlkörper geleitet. Das Kühlgas umfasst ein Inertgas. Bevorzugt wird die Temperatur des Kühlgases vor Einleitung in den Kühlkörper so eingestellt, dass der Kühlkörper oder die gesamte Kondensationsfalle eine vorgebbare Temperatur einnehmen, so dass die gewünschte Kondensation der Verunreinigungen stattfindet. Durch das erfindungsgemäße Verfahren können mechanische Kühlanlagen mit Kühlmitteln unterstützt oder sogar ersetzt werden.

Durch Unterstützung, beziehungsweise den Verzicht auf mechanische Kühlanlagen mit Kühlmitteln ist ein umweltfreundlicherer Betrieb der Anlage möglich. Im Falle einer unterstützenden Kaltgaskühlung können Energieeinsparungen erzielt werden, Neuanlagen können kleiner dimensioniert werden. Bei Ersatz des mechanischen Kühlsystems wird, neben einer 100%igen Energieeinsparung zum Betrieb der Anlage, auf umweltschädliche Kühlmittel wie beispielsweise Ammoniak oder Kohlenwasserstoffe verzichtet, welche heute entsorgt werden müssen. Relativ aufwändige regelmäßige Wartungsvorgänge der mechanischen Kühlanlage entfallen, welche heute aufgrund vorhandener Kühlmittel oft nur durch spezialisierte Firmen durchgeführt werden können. Da oftmals im Lötprozess ein Inertgas zum Inertisieren der Lötanlage eingesetzt wird, kann das Abgas, also das Kühlgas nach Erfüllen der Kühlfunktion, in vorteilhafter Weise als Inertgas in die Lötanlage eingeführt werden und dort zu einer Inertisierung der Atmosphäre in der Lötanlage dienen.

In einer bevorzugten Ausgestaltung des Verfahrens wird flüssiges Inertgas als Kühlgas in den Kühlkörper eingeleitet. Das bedeutet also, dass bei Einleiten des Inertgases in den Kühlkörper das Kühlgas zumindest teilweise in flüssiger Form vorliegt. Bevorzugt ist dabei, dass das Kühlgas beim Einleiten zu 80 Massen-% in flüssiger Form vorliegt oder ganz besonders bevorzugt sogar mit mindestens 95 Massen - % in flüssiger Form vorliegt.

Durch die Verwendung von flüssigem Inertgas wird zumindest teilweise die Verdampfungsenthalpie des flüssigen Inertgases zur Kühlung des Kühlkörpers einsetzbar. Somit wird ein effizientes Verfahren bereitgestellt, da nicht zusätzlich Energie aufgewendet werden muss, um das flüssige Kühlgas vor dem Einleiten in den Kühlkörper zu verdampfen. Hierdurch können ineffiziente mechanische Kühlsysteme stark unterstützt beziehungsweise ersetzt werden.

Gemäß einer weiteren vorteilhaften Ausgestaltung des Verfahrens wird die Atmosphäre aus einer Lötzone der Lötanlage der Kondensationsfalle zugeführt. Somit wird bevorzugt die Verunreinigungen enthaltende Atmosphäre direkt nach dem Entstehen der Verunreinigung beim Lötprozess aus der Lötanlage abgesaugt und in der Kondensationsfalle gereinigt. In diesem Fall wird die gereinigte Atmosphäre bevorzugt in eine Vorheizzone der Lötanlage zurückgeführt.

Bevorzugt wird das Kühlgas mit einer vorgebbaren Temperatur in den Kühlkörper eingeleitet. Eine vorgebbare Temperatur des Kühlgases wird insbesondere durch eine Mischung des gasförmigen und des flüssigen Inertgases erreicht.

Das bedeutet, dass ein kaltes Gas, welches gegebenenfalls Anteile von flüssigem Inertgas enthalten kann, als Kühlgas zur Kühlung des Kühlkörpers zum Einsatz kommt. Durch die Mischung von flüssigem und gasförmigem Inertgas wird teilweise die Verdampfungsenthalpie des flüssigen Inertgases, beziehungsweise die spezifische Wärmekapazität des gemischten Kaltgases zur Kühlung des Kühlkörpers einsetzbar. Zudem ist es so möglich, durch eine gezielte Mischung von flüssigem Inertgas und gasförmigen Inertgas eine vorgebbare Temperatur des Kühlgases zu erreichen.

Gemäß der Erfindung wird eine Temperatur in der Kondensationsfalle durch mindestens einen der folgenden Parameter geregelt:
- Temperatur des verdampften austretenden Gases aus dem Kühlkörper,
- Druck des Kühlgases im Kühlkörper, und
- Volumenstrom des Kühlgases am Eintritt in den Kühlkörper.

Es ist somit eine einfache Regelung der Temperatur der Kondensationsfalle möglich, wobei auch kurzfristig auf Schwankungen reagiert werden kann.

Die Regelung der durch den Kühlkörper strömenden Menge an Kühlgas wird bevorzugt durch mindestens eine der folgenden Parameter als Steuergrößen erlangt:
- Temperatur,
- Druck,
- Volumenstrom.

Zudem ist vorteilhaft, wenn das Kühlgas aus dem Kühlkörper einer der folgenden Zonen zugeführt wird:
- einer Vorheizzone, in der Flachbaugruppen vor Erreichen der Lötzone vorgeheizt werden,
- einer Lötzone, in der Flachbaugruppen gelötet werden, und
- einer Abkühlzone, in der Flachbaugruppen nach dem Löten abgekühlt werden.

Das Abgas des Kühlvorgangs kann somit zur Inertisierung der Lötzone, der Abkühlzone und/oder der Vorheizzone eingesetzt werden. Das Abgas kann auch, insbesondere wenn es noch eine relativ niedrige Temperatur aufweist, in einem Kühlkörper durch die Abkühlzone geleitet werden, so dass eine gleichmäßige Kühlung in der Abkühlzone erfolgt. Üblicherweise sind Vorheizzone, Lötzone und Kühlzone durch geeignete Maßnahmen voneinander getrennt, um ein Strömen des Gases von einer Zone in eine andere Zone zu unterbinden. Dies wird beispielsweise durch eine geeignete, zonenweise Atmosphärenführung in den einzelnen Zonen, die diesbezüglich auch noch jeweils Unterzonen aufweisen können, erreicht. Hierdurch kann auch eine thermische Abschottung der einzelnen Zonen oder Unterzonen erreicht. Alternativ oder zusätzlich können geeignete temperatur-resistente Mittel zur Abtrennung der Zonen oder Unterzonen voneinander ausgebildet sein, beispielsweise entsprechende Schürzen.

Gemäß einer vorteilhaften Ausgestaltung ist es hier möglich, das Inertgas nach Durchströmen des Kühlkörpers auf eine vorgebbare Heiztemperatur zu erhitzen.

Dies kann insbesondere durch eine elektrische Beheizung oder durch einen Wärmeübergang von einem Hitzemedium erfolgen. Dadurch kann das Inertgas zum Aufheizen der Vorheiz- und/oder Lötzone eingesetzt werden oder es kann dabei helfen, die Temperatur in diesem Bereich aufrecht zu erhalten. Insbesondere ist es möglich, durch die Aufheizung auf die Heiztemperatur die Temperatur in Vorheiz- und/oder Lötbereich zu regeln.

Gemäß einer weiteren Ausgestaltung des Verfahrens erfolgt eine Mischung von flüssigem und gasförmigem Inertgas in einem statischen Mischer vor Einleiten in den Kühlkörper.

Ein statischer Mischer ermöglicht in vorteilhafter Weise eine effektive Mischung von flüssigem und gasförmigen Inertgas zum Kühlgas, ohne dass weitere bewegte Teile benötigt werden. Üblicherweise wird beispielsweise ein flüssiges Inertgas wie beispielsweise Stickstoff in einem Tank mit einem relativ hohen Druck vorgehalten, so dass es möglich ist, diesen Druck zur Beförderung des Inertgases in flüssiger Form bis zum Mischer und zum Unterstützen des Mischvorgangs einzusetzen.

Gemäß einer vorteilhaften Ausgestaltung des Verfahrens wird die Temperatur des Kühlgases stromabwärts des Mischers überwacht und als Regelgröße für den Mengenanteil an zuzugebendem flüssigen Inertgas eingesetzt.

So ist es möglich anhand einer Größe, nämlich des Mengen- oder Massenanteils von flüssigem Inertgas an dem Kühlgas, welches durch die entsprechende Mischung von flüssigem und gasförmigen Inertgas erzeugt wird, die Temperatur des Kühlgases vorzugeben und einzustellen. Es hat sich herausgestellt, dass diese Regelgröße einfach und zuverlässig in einem entsprechenden Regelkreis einsetzbar ist.

Gemäß einer weiteren Ausgestaltung des Verfahrens wird als Inertgas mindestens eines der folgenden Gase eingesetzt wird:
- Stickstoff;
- Argon;
- Helium und
- Kohlendioxid.

Insbesondere der Einsatz von Stickstoff hat sich als vorteilhaft erwiesen, da Stickstoff in hoher Reinheit verfügbar ist und für den Benutzer des Verfahrens kostengünstig ist. Zudem ist der Einsatz von Stickstoff umweltfreundlich und wird regelmäßig bereits als Inertgas im Lötprozeß eingesetzt, so dass hier gegebenenfalls ein doppelter Nutzen gezogen werden kann, so dass die Effizienz des Prozesses weiterhin gesteigert wird. Helium bewirkt einen guten Wärmeübergang und erlaubt so eine besonders effektive Kühlung.

Gemäß einem weiteren Aspekt der Erfindung wird eine Vorrichtung zum Kondensieren von Verunreinigungen der Atmosphäre in einer Lötanlage vorgeschlagen, die eine Quelle für Kühlgas, eine Lötanlage mit einer einen Kühlkörper aufweisenden Kondensationsfalle und eine Kühlgasleitung aufweist, wobei die Quelle für Kühlgas und der Kühlkörper durch die Kühlgasleitung strömungstechnisch miteinander verbunden sind. Die Vorrichtung ist insbesondere eingerichtet und ausgestattet zur Durchführung des erfindungsgemäßen Verfahrens. Die Vorrichtung weist somit insbesondere eine Steuereinheit auf, die zur Durchführung des erfindungsgemäßen Verfahrens eingerichtet ist. Mit der erfindungsgemäßen Vorrichtung kann ein Kühlgas als Kühlmittel für einen Kühlkörper in einer Kondensationsfalle eingesetzt werden, so dass auf Kühlmittel, die energieintensiv in mechanischen Kühlanlagen gekühlt werden, verzichtetet werden kann beziehungsweise das solche unterstützt werden können.

Gemäß einer vorteilhaften Ausgestaltung der Vorrichtung ist die Quelle eine Quelle für flüssiges Kühlgas, wobei in der Kühlgasleitung keine Wärmequelle zum Zuführen von Wärme in die Kühlgasleitung angeordnet, so dass flüssiges Kühlgas aus der Quelle für flüssiges Kühlgas in den Kühlkörper einleitbar ist.

Mit Wärmequelle sind im Sinne der vorliegenden Erfindung solche Vorrichtungen gemeint, die aktiv Wärmeenergie, zu dem in der Kühlgasleitung geführten Kühlgas zuführen. Es sind insbesondere Heizdrähte oder ähnliche elektrisch betriebene Vorrichtungen gemeint. Die Umgebungsatmosphäre zählt auch nicht zu einer Wärmequelle im Sinne der vorliegenden Erfindung. Auch wird das Zuführen von Kühlgas mit einer relativ höheren Temperatur zu dem flüssigen Kühlgas nicht als Wärmequelle im Sinne der vorliegenden Erfindung aufgefasst. Die Kühlgasleitung ist so ausgelegt, dass zumindest ein Teil des Kühlgases, bevorzugt das gesamte Kühlgas, die Kühlzone im flüssigen Zustand erreicht. Es muss also insbesondere eine Kühlgasleitung zwischen der Quelle für flüssiges Kühlgas und der Kühlzone ausgebildet sein. Es ist dabei unerheblich, ob in einer anderen Leitung zwischen Quelle für flüssiges Kühlgas und Kühlzone eine Wärmequelle ausgebildet ist.

Vorzugsweise umfasst die Vorrichtung einen Mischer zum Mischen von gasförmigem und flüssigem Inertgas, welcher einen Gasanschluss zur Zuführung von gasförmigem Inertgas, einen Flüssiganschluss zur Zuführung von flüssigem Inertgas und einen Kühlgasausgang aufweist, welcher mit einer dem Kühlkörper der Kondensationsfalle verbindbar ist.

Gemäß einer weiteren Ausgestaltung der Vorrichtung ist der Kühlkörper abgasseitig strömungstechnisch mit einer der folgenden Zonen verbunden:
- einer Vorheizzone, in der Flachbaugruppen vor Erreichen der Lötzone vorgeheizt werden,
- einer Lötzone, in der Flachbaugruppen gelötet werden, und
- einer Abkühlzone, in der Flachbaugruppen nach dem Löten abgekühlt werden.

Abgasseitig bedeutet in diesem Zusammenhang, dass das Kühlgas, welches in den Kühlkörper verdampft oder erwärmt wurde, aus diesem herausgeführt wird und den entsprechenden Zonen zugeführt wird. Somit kann das Kühlgas also zur Inertisierung der entsprechenden Zonen beitragen.

Es ist auch vorteilhaft, wenn der Kühlkörper abgasseitig strömungstechnisch mit einem weiteren Kühlkörper in der Abkühlzone verbunden ist. Somit wird das Kühlgas zum Kühlen in der Abkühlzone verwendet.

Es ist ferner bevorzugt, wenn die Kondensationsfalle eingangsseitig mit einer Lötzone der Lötanlage strömungstechnisch verbunden ist.

Die für das erfindungsgemäße Verfahren offenbarten Details und Vorteile lassen sich auf die erfindungsgemäße Vorrichtung anwenden und übertragen und umgekehrt. Im Folgenden wird die Erfindung anhand der beigefügten Figuren näher erläutert, ohne auf die dort gezeigten Details und Ausführungsbeispiele beschränkt zu sein. Es zeigt schematisch und exemplarisch:

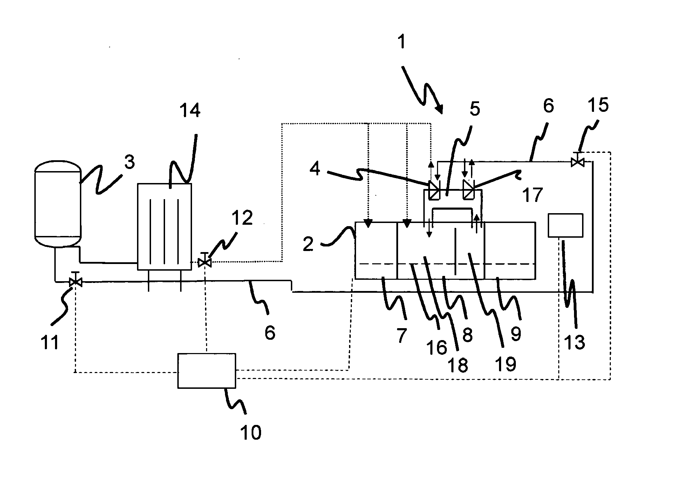

- Fig. 1:: ein Beispiel einer Vorrichtung zum Kondensieren von Verunreinigungen der Atmosphäre in einer Lötanlage.

Fig. 1 zeigt schematisch eine Vorrichtung 1 zum Kondensieren von Verunreinigungen der Atmosphäre in einer Lötanlage 2. Die Lötanlage 2 umfasst eine Vorheizzone 7, eine Lötzone 8 und eine Kühlzone 9, durch die auf einer Transportvorrichtung 16 nicht dargestellte Flachbaugruppen durch die Lötanlage 2 transportiert werden. Die Lötanlage 2 umfasst eine Kondensationsfalle 5 mit einem Kühlkörper 4 und einem konventionellen Kühlkörper 17. Die Vorrichtung 1 weist ferner eine Quelle 3 für flüssiges Kühlgas auf, in welcher flüssiges Inertgas, im vorliegenden Beispiel Stickstoff, gespeichert ist, wobei die Quelle 3 für Kühlgas über eine Kühlgasleitung 6 mit dem Kühlkörper 4 verbunden ist. In der Kühlgasleitung 6 befinden sich ein Flüssiggasventil 11 und ein Kühlgasventil 15. Zudem ist die Quelle 3 für Kühlgas über eine Leitung, in der sich ein Verdampfer 14 befindet, mit der Vorheizzone 7 und der Lötzone 8 strömungstechnisch verbunden. In der Leitung von der Quelle 3 zur Lötanlage 2 befindet sich hinter dem Verdampfer 14 ein Gasventil 12. Die Vorrichtung 1 umfasst ferner eine Kontrolleinheit 10, die mit dem Flüssiggasventil 11, dem Gasventil 12, der Lötanlage 2, einem Temperaturfühler 13 und dem Kühlgasventil 15 über Signalleitungen verbunden ist.

Im Betrieb werden Flachbaugruppen durch die Lötanlage 2 auf der Transportvorrichtung 16 transportiert, wobei die Flachbaugruppen zunächst die Vorheizzone 7, anschließend die Lötzone 8 und abschließend die Abkühlzone 9 durchlaufen. Die Lötzone 8 ist eine Aufheizzone 18 und eine Hochtemperaturzone 19 unterteilt, in der der Lötprozess erfolgt. In der Vorheizzone 7 erfolgt ein erstes Aufwärmen der Flachbaugruppen. Beim Lötprozess treten Verunreinigungen aus dem Lot und/oder dem Flussmittel in die Atmosphäre der Lötanlage. Diese (Gas-)Atmosphäre wird aus der Lötzone gesaugt und der Kondensationsfalle 5 zugeführt. Die Kondensationsfalle 5 wird durch den konventionellen Kühlkörper 17 und den Kühlkörper 4 auf einer niedrigen Temperatur gehalten, so dass die Verunreinigungen in der Kondensationsfalle 5 kondensieren, wobei die kondensierten Verunreinigungen gesammelt werden und ggf. aus der Kondensationsfalle entfernt werden. Das gereinigte Gas wird wiederum der Aufheizzone 18 der Lötzone 8 zugeführt.

Um eine inerte Atmosphäre in der Vorheizzone 7 und der Lötzone 8 zu erreichen, wird flüssigen Kühlgas aus der Quelle 3 in dem Verdampfer 14 verdampft und der Vorheizzone 7 beziehungsweise der Lötzone 8 zugeführt.

Um den Kühlkörper 4 zu kühlen, wird diesem aus der Quelle für flüssiges Kühlgas 3 über die Kühlgasleitung 6 flüssiges Inertgas zugeführt. Das flüssige Inertgas verdampft in dem Kühlkörper 4 und wird anschließend der Vorkühlzone 7 und der Lötzone 8 zur Inertisierung zugeführt. Die Kontrolleinheit 10 ist so eingerichtet, dass eine möglichst effektive Kühlung in der Kondensationsfalle 5 erfolgt.

Das erfindungsgemäße Verfahren und die erfindungsgemäße Vorrichtung erlauben in vorteilhafter Weise eine hocheffiziente Kühlung von Kondensationsfallen in einer Lötanlage. Das Kühlgas kann nach der Verwendung in der Kondensationsfalle 5 vorteilhaft zur Inertisierung der Lötanlage 2 eingesetzt werden.

### Bezugszeichenliste

- 1: Vorrichtung
- 2: Lötanlage
- 3: Quelle für Kühlgas
- 4: Kühlkörper
- 5: Kondensationfalle
- 6: Kühlgasleitung
- 7: Vorheizzone
- 8: Lötzone
- 9: Abkühlzone
- 10: Kontrolleinheit
- 11: Flüssiggasventil
- 12: Gasventil
- 13: Temperaturfühler
- 14: Verdampfer
- 15: Kühlgasventil
- 16: Transportvorrichtung
- 17: konventioneller Kühlkörper
- 18: Aufheizzone
- 19: Hochtemperaturzone

## Patentansprüche

1. Verfahren zum Kondensieren von Verunreinigungen der Atmosphäre in einer Lötanlage (2) bei dem die Atmosphäre aus der Lötanlage (2) einer Kondensationsfalle (5) mit einem Kühlkörper (4) zugeführt wird, wobei ein Kühlgas in den Kühlkörper (4) geleitet wird, wobei das Kühlgas Inertgas umfasst und **dadurch gekennzeichnet, dass** eine Temperatur in der Kondensationsfalle (5) durch mindestens einen der folgenden Parameter geregelt wird:
- Temperatur des verdampften austretenden Kühlgases,
- Druck des Kühlgases im Kühlkörper und
- Volumenstrom des Kühlgases am Eintritt in den Kühlkörper.

2. Verfahren nach Anspruch 1, wobei flüssiges Inertgas als Kühlgas in den Kühlkörper (4) geleitet wird.

3. Verfahren nach Anspruch 1 oder 2, bei dem die Atmosphäre aus einer Lötzone (8) der Lötanlage (2) der Kondensationsfalle zugeführt wird.

4. Verfahren nach einem der vorhergehenden Ansprüche, bei dem das Kühlgas mit einer vorgebbaren Temperatur in den Kühlkörper (4) eingeleitet wird.

5. Verfahren nach einem der vorhergehenden Ansprüche, bei dem das Kühlgas aus dem Kühlkörper (4) einer der folgenden Zonen zugeführt wird:
- einer Vorheizzone (7), in der Flachbaugruppen vor Erreichen der Lötzone (8) vorgeheizt werden,
- einer Lötzone (8), in der Flachbaugruppen gelötet werden und
- einer Abkühlzone (9), in der Flachbaugruppen nach dem Löten abgekühlt werden.

6. Vorrichtung (1) zum Kondensieren von Verunreinigungen der Atmosphäre in einer Lötanlage (2), die eine Quelle (3) für Kühlgas, eine Lötanlage (2) mit einer einen Kühlkörper (4) aufweisenden Kondensationsfalle (5) und eine Kühlgasleitung (6) aufweist, wobei die Quelle (3) für Kühlgas und der Kühlkörper (4) durch die Kühlgasleitung (6) strömungstechnisch miteinander verbunden sind, und **dadurch gekennzeichnet, dass** Mittel zur Regelung der Temperatur in der Kondensationsfalle (5) durch mindestens einen der folgenden Parameter vorhanden sind:
- Temperatur des verdampften austretenden Kühlgases,
- Druck des Kühlgases im Kühlkörper und
- Volumenstrom des Kühlgases am Eintritt in den Kühlkörper.

7. Vorrichtung (1) nach Anspruch 6, bei der die Quelle (3) flüssiges Kühlgas aufweist, wobei in der Kühlgasleitung (6) keine Wärmequelle zum Zuführen von Wärme in die Kühlgasleitung angeordnet ist, so dass flüssiges Kühlgas aus der Quelle (3) für flüssiges Kühlgas in den Kühlkörper (4) einleitbar ist.

8. Vorrichtung (1) nach Anspruch 6 oder 7, wobei der Kühlkörper (4) abgasseitig strömungstechnisch mit einer der folgenden Zonen verbunden ist:
- einer Vorheizzone (7), in der Flachbaugruppen vor Erreichen der Lötzone vorgeheizt werden.
- einer Lötzone (8), in der Flachbaugruppen gelötet werden, und
- einer Abkühlzone (9), in der Flachbaugruppen nach dem Löten abgekühlt werden.

9. Vorrichtung nach einem der Ansprüche 6 bis 8, wobei Kondensationsfalle (5) eingangsseitig mit einer Lötzone (8) der Lötanlage (2) strömungstechnisch verbunden ist.

## Claims

1. Process for condensing contaminants in the atmosphere in a soldering system (2), in which process the atmosphere from the soldering system (2) is fed to a condensation trap (5) having a heat sink (4), a cooling gas being conducted into the heat sink (4), the cooling gas comprising inert gas and **characterized in that** a temperature in the condensation trap (5) is regulated by at least one of the following parameters:
- temperature of the evaporated, emerging cooling gas,
- pressure of the cooling gas in the heat sink, and
- volumetric flow rate of the cooling gas at the inlet into the heat sink.

2. Process according to Claim 1, wherein liquid inert gas is conducted as cooling gas into the heat sink (4).

3. Process according to Claim 1 or 2, in which the atmosphere from a soldering zone (8) of the soldering system (2) is fed to the condensation trap.

4. Process according to one of the preceding claims, in which the cooling gas is conducted into the heat sink (4) at a predefinable temperature.

5. Process according to one of the preceding claims, in which the cooling gas from the heat sink (4) is fed to one of the following zones:
- a preheating zone (7), in which printed circuit board assemblies are preheated before they reach the soldering zone (8),
- a soldering zone (8), in which printed circuit board assemblies are soldered, and
- a cooling zone (9), in which printed circuit board assemblies are cooled after the soldering.

6. Device (1) for condensing contaminants in the atmosphere in a soldering system (2), which device comprises a source (3) for cooling gas, a soldering system (2) with a condensation trap (5) having a heat sink (4), and a cooling gas line (6), wherein the source (3) for cooling gas and the heat sink (4) are connected to one another fluidically by the cooling gas line (6), and **characterized in that** means are provided for regulating the temperature in the condensation trap (5) by at least one of the following parameters:
- temperature of the evaporated, emerging cooling gas,
- pressure of the cooling gas in the heat sink, and
- volumetric flow rate of the cooling gas at the inlet into the heat sink.

7. Device (1) according to Claim 6, wherein the source (3) comprises liquid cooling gas, wherein no heat source for introducing heat into the cooling gas line is arranged in the cooling gas line (6), such that liquid cooling gas can be conducted from the source (3) for liquid cooling gas into the heat sink (4).

8. Device (1) according to Claim 6 or 7, wherein the heat sink (4) is connected fluidically to one of the following zones on the off-gas side:
- a preheating zone (7), in which printed circuit board assemblies are preheated before they reach the soldering zone,
- a soldering zone (8), in which printed circuit board assemblies are soldered, and
- a cooling zone (9), in which printed circuit board assemblies are cooled after the soldering.

9. Device according to one of Claims 6 to 8, wherein the condensation trap (5) is connected fluidically to a soldering zone (8) of the soldering system (2) on the input side.

## Revendications

1. Procédé de condensation d'impuretés de l'atmosphère dans une installation de soudage (2), dans lequel l'atmosphère est acheminée de l'installation de soudage (2) à un puits de condensation (5) avec un corps de refroidissement (4), un gaz de refroidissement étant guidé dans le corps de refroidissement (4), le gaz de refroidissement comprenant un gaz inerte, et **caractérisé en ce qu'**une température dans le puits de condensation (5) est régulée par au moins l'un des paramètres suivants :
- la température du gaz de refroidissement sortant évaporé,
- la pression du gaz de refroidissement dans le corps de refroidissement et
- le débit volumique du gaz de refroidissement à l'entrée dans le corps de refroidissement.

2. Procédé selon la revendication 1, dans lequel du gaz inerte fluide est guidé sous forme de gaz de refroidissement dans le corps de refroidissement (4).

3. Procédé selon la revendication 1 ou 2, dans lequel l'atmosphère est acheminée d'une zone de soudage (8) de l'installation de soudage (2) au puits de condensation.

4. Procédé selon l'une quelconque des revendications précédentes, dans lequel le gaz de refroidissement est introduit dans le corps de refroidissement (4) à une température prédéfinissable.

5. Procédé selon l'une quelconque des revendications précédentes, dans lequel le gaz de refroidissement est acheminé depuis le corps de refroidissement (4) à l'une des zones suivantes :
- une zone de préchauffage (7) dans laquelle des modules plats sont préchauffés avant d'atteindre la zone de soudage (8),
- une zone de soudage (8) dans laquelle des modules plats sont soudés et
- une zone de refroidissement (9) dans laquelle des modules plats sont refroidis après le soudage.

6. Dispositif (1) de condensation d'impuretés de l'atmosphère dans une installation de soudage (2), qui présente une source (3) pour du gaz de refroidissement, une installation de soudage (2) avec un puits de condensation (5) présentant un corps de refroidissement (4) et une conduite de gaz de refroidissement (6), la source (3) pour du gaz de refroidissement et le corps de refroidissement (4) étant connectés l'un à l'autre par une technique d'écoulement par la conduite de gaz de refroidissement (6), et **caractérisé en ce qu'**il est prévu des moyens pour réguler la température dans le puits de condensation (5) par au moins l'un des paramètres suivants :
- la température du gaz de refroidissement sortant évaporé,
- la pression du gaz de refroidissement dans le corps de refroidissement et
- le débit volumique du gaz de refroidissement à l'entrée dans le corps de refroidissement.

7. Dispositif (1) selon la revendication 6, dans lequel la source (3) présente du gaz de refroidissement fluide, aucune source de chaleur n'étant disposée dans la conduite de gaz de refroidissement (6) pour l'alimentation en chaleur de la conduite de gaz de refroidissement, de telle sorte que du gaz de refroidissement fluide puisse être introduit depuis la source (3) pour du gaz de refroidissement fluide dans le corps de refroidissement (4).

8. Dispositif (1) selon la revendication 6 ou 7, dans lequel le corps de refroidissement (4) est connecté par une technique d'écoulement du côté du gaz d'échappement à l'une des zones suivantes :
- une zone de préchauffage (7) dans laquelle des modules plats sont préchauffés avant d'atteindre la zone de soudage,
- une zone de soudage (8) dans laquelle des modules plats sont soudés et
- une zone de refroidissement (9) dans laquelle des modules plats sont refroidis après le soudage.

9. Dispositif selon l'une quelconque des revendications 6 à 8, dans lequel le puits de condensation (5) est connecté du côté de l'entrée par une technique d'écoulement à une zone de soudage (8) de l'installation de soudage (2).
